Europäisches Patentamt

European Patent Office

Office européen des brevets

(19)

(11) Veröffentlichungsnummer: **0 246 537 B1**

(12) **EUROPÄISCHE PATENTSCHRIFT**

(45) Veröffentlichungstag der Patentschrift: **18.12.91**

(51) Int. Cl.5: **C08F 285/00, C08F 283/12**

(21) Anmeldenummer: **87106845.8**

(22) Anmeldetag: **12.05.87**

(54) **Kerbschlagzähe Pfropfpolymerisate.**

(30) Priorität: **23.05.86 DE 3617267**

(43) Veröffentlichungstag der Anmeldung:
**25.11.87 Patentblatt 87/48**

(45) Bekanntmachung des Hinweises auf die
Patenterteilung:
**18.12.91 Patentblatt 91/51**

(84) Benannte Vertragsstaaten:
**DE ES FR GB IT NL**

(56) Entgegenhaltungen:
**EP-A- 0 004 947**
**EP-A- 0 217 257**
**FR-A- 2 071 919**

(73) Patentinhaber: **BAYER AG**

**W-5090 Leverkusen 1 Bayerwerk(DE)**

(72) Erfinder: **Lindner, Christian, Dr.**
**Riehler Strasse 200**
**W-5000 Koeln 60(DE)**
Erfinder: **Grape, Wolfgang, Dr.**
**Roggendorfstrasse 51**
**W-5000 Koeln 80(DE)**
Erfinder: **Kress, Hans-Jürgen, Dr.**
**Scheiblerstrasse 111**
**W-4150 Krefeld(DE)**
Erfinder: **Eichenauer, Herbert, Dr.**
**Goethestrasse 71**
**W-4047 Dormagen 1(DE)**
Erfinder: **Ott, Karl-Heinz, Dr.**
**Paul-Klee-Strasse 54**
**W-5090 Leverkusen 1(DE)**

**Beschreibung**

Die Erfindung betrifft Pfropfpolymerisate mit einem Silikonkautschuk als Kern, welcher von wenigstens zwei chemisch verschiedenen Hüllen umgeben ist und ihre Anwendung als thermoplastische Formmassen.

ABS (Acrylnitril-Butadien-Styrol)-Kunststoffe haben große technische Bedeutung; wegen des darin in polymerer Form enthaltenen Diens (z.B. Butadien) ist ihre Witterungsbeständigkeit nicht befriedigend, so daß sie im Freien nur begrenzt verwendet werden können. Diesem Mangel kann man auch mit UV-absorbierenden Stoffen oder Lichtschutzmitteln nur unvollkommen abhelfen. Ersetzt man den oxidationsempfindlichen Dienkautschuk z.B. durch einen Alkylacrylatkautschuk, dann ist die Schlagfestigkeit und das Aussehen der Formkörper nicht befriedigend. Für gute physikalische Eigenschaften müssen die statt des Dienkautschuks eingesetzten Acrylesterkautschuke vernetzt sein. Um vernetzte Acrylesterkautschuke herzustellen, hat man geeignete Monomere in Emulsion zusammen mit polyfunktionellen Monomeren polymerisiert oder das zunächst unvernetzte Polymerisat mit einem organischen Peroxid, z.B. Benzoylperoxid behandelt.

Die Schlagfestigkeit solcher Formmassen auf der Basis von Acrylatkautschuk, insbesondere bei tiefen Temperaturen, ist für viele Anwendungen immer noch nicht ausreichend.

Silikonkautschuke zeichnen sich durch sehr gute Tieftemperatureigenschaften aus; ihre Bepfropfung mit harzbildenden Monomeren zur Erzielung thermoplastischer Formmassen mit hochwertigen Eigenschaften ist aber schwierig.

Es wurde gefunden, daß man Silikonkautschuke als vernetzte, teilchenförmige Partikel mit vernetztem Acrylatkautschuk umhüllen kann und daß sich diese Kern/Mantel-Kautschuke mit harzbildenden Monomeren bepfropfen lassen; es wurde weiterhin gefunden, daß derartige Pfropfploymerisate besonders gute anwendungstechnische Eigenschaften aufweisen, obwohl der Silikonkautschuk durch den Acrylatkautschuk quasi abgeschirmt ist.

Gegenstand der Erfindung sind teilchenförmige Pfropfpolymerisate aus einem Kern (a), der einen vernetzten Silikonkautschuk darstellt, einer ersten Hülle (b), die einen vernetzten Acrylatkautschuk darstellt, und einer zweiten Hülle (c), die ein Polymerisat oder Copolymerisat aus harzbildenden Monomeren darstellt.

Das Gewichtsverhältnis des Kerns (a) und der ersten Hülle (b) ist 0,1 zu 99,9 bis 90 zu 10, bevorzugt 10 zu 90 bis 50 zu 50, und der Anteil von (c) am gesamten Pfropfpolymerisat 90 bis 20, bevorzugt 80 bis 40 Gew.-%. Die erfindungsgemäßen Pfropfpolymerisate haben mittlere Teilchendurchmesser ($d_{50}$) von 0,05 bis 10 $\mu$m, bevorzugt 0,1 bis 2 $\mu$m. Besonders bevorzugte Teilchendurchmesser sind 0,1 bis 1 $\mu$m.

Das Material des Kernes (a) ist ein vernetzter Silikonkautschuk und enthält Einheiten der allgemeinen Formel

$R_2SiO$, $RSiO_{3/2}$, $R_3SiO_{1/2}$ und $SiO_2$,

wobei R einen einwertigen organischen Rest darstellt.

Die Mengen der einzelnen Siloxaneinheiten sind dabei z.B. so bemessen, daß auf 100 Mol Einheiten der Formel $R_2SiO$ 0 bis 10 Mol Einheiten der Formel $RSiO_{3/2}$, 0 bis 1,5 Mol Einheiten $R_3SiO_{1/2}$ und 0 bis 3 Mol Einheiten der Formel $SiO_2$ vorhanden sind.

R kann ein einwertiger gesättigter Kohlenwasserstoffrest mit 1 bis 18 Kohlenstoffatomen, der Phenylrest oder ein Alkoxy-Rest oder eine radikalisch angreifbare Gruppe wie der Vinyl- oder $\gamma$-Mercaptopropylrest sein. Bevorzugt ist, daß mindestens 80 % aller Reste R Methyl sind; insbesondere bevorzugt sind Kombinationen aus Methyl und Ethyl.

Bevorzugte Silikonkautschuke (a) enthalten eingebaute Einheiten radikalisch angreifbarer Gruppen, d.h. solche, die zur Radikaladdition oder Übertragungsreaktion befähigt sind, insbesondere Vinyl-, Allyl-, Chloralkyl-, Mercaptogruppen, vorzugsweise in Mengen von 2 - 10 Mol-% bezogen auf alle Reste R.

Die erste Hülle (b) stellt einen vernetzten Acrylatkautschuk dar und ist insbesondere ein vernetztes Polymerisat aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$-$C_8$-Alkylester, beispielsweise Methyl-, Ethyl-, Butyl-, Octyl- und 2-Ethylhexylester, Halogenalkylester, bevorzugt $C_1$-$C_8$-Halogenalkylester, wie Chlorethylacrylat, und aromatische Ester wie Benzylacrylat und Phenethylacrylat. Sie können einzeln oder in Mischung eingesetzt werden, wobei mindestens ein Alkylester im Gemisch vorhanden sein soll. Zur Vernetzung werden polyfunktionelle Monomere copolymerisiert. Beispiele sind: Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Aklohol (vorzugsweise 8 bis 30 Kohlenstoffatome im Esterrest), wie Triallylcyanurat, Triallylisocyanurat; Divinylver-

bindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallyphosphat und 1,3,5-Triacryloyl-hexahydro-s-triazin. Besonders bevorzugte polyfunktionelle Monomere sind Triallylcyanurat, Triallylisocyanurat, Triallylphosphat, Allylmethacrylat.

Die Menge der zur Vernetzung benutzten polyfunktionellen Monomeren ist bevorzugt 0,05 bis 5,0 Gew.-% der Masse der ersten Hülle (b). Das Elastomer der ersten Hülle (b) kann zusätzlich noch ein copolymerisierbares Monomeres oder mehrere solcher Monomeren vom Vinyl- oder Vinylidentyp einpolymerisiert enthalten. Beispiele sind: Methylmethacrylat, Butylacrylat, Acrylnitril, Styrol, $\alpha$-Methylstyrol, Acrylamide, Vinylalkylether. Diese Comonomere können in Mengen bis zu 40 Gew.-% des Polymerisats (b) einpolymerisiert werden.

Die zweite Hülle (c) stellt ein pfropfpolymerisiertes Polymerisat aus harzbildenden $\alpha$, $\beta$-ungesättigten, radikalisch polymerisierbaren Monomeren dar, insbesondere aus der Reihe $\alpha$-Methylstyrol, Styrol, p-Methylstyrol, Halogenstyrol, Acrylnitril, Methacrylnitril, Aklylmethacrylate mit bis zu 8 C-Atomen im Alkoholteil, Maleinsäurederivate, insbesondere Maleinimide, Vinylacetat, Vinylchlorid, Vinylidenfluorid. Besonders bevorzugt sind Copolymerisate aus wenigstens zwei Monomeren aus der Reihe Styrol, $\alpha$-Methylstyrol, Acrylnitril, Methylmethacrylat.

Ein weiterer Gegenstand der Erfindung ist ein Verfahren zur Herstellung der erfindungsgemäßen Pfropfpolymerisate.

In einer ersten Stufe wird einen Emulsion des Kernmaterials (a) hergestellt:

Die Herstellung einer Emulsion eines langkettigen, OH-terminierten Silikonöls durch Emulsionspolymerisation ist z.B. in US-PS 2 891 910 und in GB-PS 1 024 024 beschrieben. Besonders bevorzugt ist das in der britischen Patentschrift offenbarte Verfahren, eine Aklylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden, und man hat nach Fertigstellung der Emulsion wenig störende Fremdmoleküle aus dem Katalysator in dem fertigen Produkt. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer oder anionischer Natur sein. Als anionische Co-Emulgatoren kommen insbesondere Salze der obengenannten n-Alkyl- oder Alkylbenzolsulfonsäuren in Frage. Nichtionogene Co-Emulgatoren sind Polyoxyethylenderivate von Fettalkoholen, Fettsäuren und dergl. Beispiele für derartige Emulgiermittel sind POE (3)-Laurylalkohol (POE = Polyoxyethylen (x) mit x = Polymerisationsgrad), POE (20)-Oleylalkohol, POE (7)-Nonylphenol oder POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt).

Im allgemeinen sind solche Silikonöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Silikonöls erfolgt z.B. weiterhin über die Temperatur bei der Gleichgewichtsbildung zwischen Siloxan, Wasser und dem durch Ringöffnung des Siloxans zunächst gebildeten Silanöls (bzgl. Einzelheiten zum Zusammenhang zwischen Temperatur und Molekulargewicht wird auf die Arbeit von D.R. Weyenberg et. al., J. Polymer Sci. Part C, 27 pp 27-34 (1969) verwiesen).

Der Einbau von radikalisch angreifbaren Gruppen in das bevorzugte Silikoncopolymer kann durch Arbeiten in Anwesenheit geeigneter Siloxanoligomerer erfolgen. Geeignete Ausgangsoligomere sind z.B. Tetramethyltetravinylcyclotetrasiloxan oder $\gamma$-Mercaptopropylmethyldimethoxysilan oder dessen Hydrolysat.

Diese funktionellen Oligomere werden dem Basisoligomer Octamethylcyclotetrasiloxan zur Copolymerisation in den gewünschten Mengen beigefügt.

Analog kann auch der Einbau längerkettiger Alkylreste R, wie z.B. Ethyl-, Propyl- oder dergleichen bzw. der Einbau von Phenylgruppen erreicht werden.

Die Silikonpfropfgrundlage muß wenigstens teilweise vernetzt sein.

Eine ausreichende Vernetzung kann jedoch schon stattfinden, indem z.B. die bevorzugten eingesetzten Vinyl- und Mercaptopropylgruppen bei der Emulsionspolymerisation der Silikonbestandteile miteinander reagieren, so daß die Zugabe eines externen Vernetzers nicht erforderlich sein kann. Dennoch kann durchaus ein Vernetzung bewirkendes Silan zugefügt werden, um den Vernetzungsgrad des Silikonkautschukes zu erhöhen.

Der Einbau von Verzweigungen oder Vernetzungen kann durch Zugabe von z.B. Tetraethoxysilan oder eines Silans der allgemeinen Formel $RSiX_3$, wobei X eine hydrolysierbare Gruppe, insbesondere den

EP 0 246 537 B1

Alkoxyrest darstellt, erfolgen. R hat die im Vorhergehenden beschriebene Bedeutung. Bevorzugt sind R = Methyl und R = Phenyl. Insbesondere bevorzugt sind neben Tetraethoxysilan Methyltrimethoxysilan oder Phenyltrimethoxysilan.

In der zweiten Stufe des erfindungsgemäßen Verfahrens wird in Gegenwart des Silikonkautschuklatex der ersten Stufe, durch Emulsionspolymerisation der Acrylatkautschuk für die erste Hülle (b) hergestellt, indem man die Monomeren (Hauptbestandteil wenigstens ein Acrylat) in dem Latex emulgiert und in an sich bekannter Weise an radikalbildende Initiatoren polymerisiert. Der Acrylatkautschuk polymerisiert auf den Silikonkautschuk. Er kann durch Mitverwendung polyfunktioneller Monomerer bereits bei der Herstellung vernetzt werden.

Bei dieser Pfropfpolymerisation der ersten Hülle (b) muß die Bildung neuer Teilchen möglichst vollständig unterbunden werden. Ein Emulsionsstabilisator muß in zur Oberflächenbedeckung der Teilchen erforderlichen Menge vorhanden sein. Die Größe dieser Teilchen ist durch die Reaktionsführung in weiten Grenzen zu variieren. Verwendet man als Kern (a) einen agglomerierten Latex um große Teilchen zu erhalten, so können diese mehrere Silikonkautschukpartikel enthalten. Man kann die Polymerisation der ersten Hülle (b) auch so führen, daß Partikel mit Silikonkautschukkern und gleichzeitig Partikel aus reinem vernetzten Acrylatkautschuk erzeugt werden. Auch solche Mischungen können unter besonderen Umständen zur Herstellung schlagfester Formmassen dienen.

Nach Beendigung der Pfropfpolymerisation des Acrylatkautschuks wird auf den erhaltenen Latex ein Vinylmonomer oder ein Gemisch aus Vinylmonomeren in Emulsion polymerisiert. Dabei bilden sich die erfindungsgemäßen Pfropfpolymerisate unter Ausbildung der zweiten Hülle (c). Bei dieser an sich bekannten Pfropfpolymerisation, die überlicherweise in Gegenwart von Radikalstartern, z.B. wasserlöslichen Initiatoren, Emulgatoren oder Komplexbildner/Pfropfaktivatoren, sowie Reglern durchgeführt wird, bilden sich im allgemeinen neben dem Pfropfpolymerisat im bestimmten Ausmaß freie Polymerisate bzw. Copolymerisate der die zweite Hülle (c) bildenden Monomeren. Die Menge dieses ungepfropften Polymerisats kann durch den Pfropfgrad bzw. die Pfropfausbeute charakterisiert werden, sie hängt ab u.a. von den Polymerisationsbedingungen, der Zusammensetzung der ersten Hülle (b), der Größe der zu pfropfenden Teilchen, und der Menge an gepfropftem Acrylatkautschuk. "Pfropfpolymerisat" im Sinne der Erfindung ist deshalb das durch Polymerisation von Vinylmonomeren in Gegenwart des Kautschuklatex erhaltene Produkt, genaugenommen also ein Gemisch aus Pfropfpolymerisat und freiem Copolymerisat der Pfropfmonomeren.

Die so hergestellten Pfropfpolymerisate können nach bekannten Verfahren aufgearbeitet werden, z.B. durch Koagulation der Latices mit Elektrolyten (Salze, Säuren oder Gemische davon) und anschließende Reinigung und Trocknung.

Die erfindungsgemäßen Pfropfpolymerisate zeichnen sich durch eine überraschend gute Kombination technisch relevanter Kunststoffeigenschaften als Thermoplast aus: Als solche Eigenschaften sind zu nennen: Alterungsstabilität, Thermostabilität, besonders bei Verarbeitung zu Formkörper, Thermoplastformkörperoberflächenbeschaffenheit, Verarbeitbarkeit, Tieftemperaturzähigkeit, Bruchfestigkeit sowie auch akzeptable Wirtschaftlickeit.

Das erfindungsgemäße Pfropfpolymerisat kann direkt verwendet werden, wenn es zu etwa 5 bis 40 Gew.-% aus Kern (a) und erster Hülle (b), bezogen auf das gesamte Pfropfpolymerisat, besteht. Wenn der Gehalt (a) plus (b) höher ist, kann ein starres Harz zugemischt werden. Starre Harze sind vorzugsweise Styrol-, Methylmethacrylat-, Acrylnitril-Terpolymere, Styrol- bzw. α-Methylstyrol-, Acrylnitril-Copolymere, Styrol-, Acrylnitril-, Acrylester-Terpolymere oder Methylmethacrylat-Homo- bzw. -Copolymere.

Man kann die erfindungsgemäßen Pfropfpolymerisate auch mit bekannten Kautschuk-modifizierten Kunststoffen vermischen, z.B. mit ABS-Kunststoffen oder mit Acrylatkautschuk-modifizierten Harzen ("ASA-Harzen"). Man kann so die Alterungsbeständigkeit und elektrostatischen Eigenschaften von ABS ohne Beeinträchtigung der mechanischen Eigenschaften verbessern oder die mechanischen Eigenschaften von ASA-Harzen und die Oberflächenbeschaffenheit von Formkörpern daraus.

Die erfindungsgemäßen Formmassen können Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform enthalten. Sie können beispielsweise durch Spritzguß oder durch Strangpressen verformt werden und sind für Formkörper jeder Art geeignet, die witterungsbeständig und schlagfest sein müssen. Beispielsweise können sie als Außenschicht eines Laminats aus mehreren verschiedenen Polymeren dienen.

1.) Herstellung einer Silikonemulsion

1.1) 38,4 Gew.-Teile Octamethylcyclotetrasiloxan, 1,2 Gew.-Teile Tetramethyltetravinylcyclotetrasiloxan und 0,2 Gew.-Teile Tetraethoxysilan werden miteinander verrührt.

4

0,5 Gew.-Teile Dodecylbenzolsulfonsäure werden zugeführt, anschließend 70 Gew.-Teile Wasser innerhalb 1 Stunde zugegeben. Dabei wird intensiv gerührt. Die Voremulsion wird mit Hilfe einer Hochdruckemulgiermaschine 2 x bei 200 bar homogenisiert. Man gibt weitere 0,5 Gew.-Teile Dodecylbenzolsulfonsäure hinzu. Die Emulsion wird 2 h bei 85°C und anschließend 36 h bei Raumtemperatur gerührt. Neutralisiert wird mit Hilfe von 5 n-NaOH. Es resultiert eine stabile Emulsion mit einem Feststoffgehalt von ca. 36 %. Das Polymer besitzt einen Gelgehalt von 82 Gew.-%, gemessen in Toluol.

2.) Herstellung eines mit Acrylatkautschuk umhüllten Silikonkautschuks

2.1) In einem Reaktor werden vorgelegt:
2500 Gew.-Teile des Latex 1.1)
288 Gew.-Teile Wasser.
Bei 70°C gibt man eine Lösung von 3 Gew.-Teilen Kaliumperoxidisulfat in 100 Gew.-Teile Wasser in den Reaktor ein.
Anschließend werden folgende Lösungen innerhalb von 5 Stunden bei 70°C in den Reaktor eindosiert:
    Lösung 1:    387 Gew.-Teile n-Butylacrylat
                1 Gew.-Teile Triallylcyanurat
    Lösung 2:    500 Gew.-Teile Wasser
                10 Gew.-Teile Na-Salz von $C_{14}$-$C_{18}$-Alkylsulfonsäuren
Danach wird die Polymerisation innerhalb von 4 Stunden bei 70°C auspolymerisiert. Der gebildete Latex enthält das Polymerisat in einer Konzentration von 35 Gew.-%. Das Polymer besitzt einen Gelgehalt von 92 Gew.-%, gemessen in Toluol, und besteht aus 70 Gew.-% Silikonkautschuk und 30 Gew.-% Acrylatkautschuk.

3.) Erfindungsgemäße Pfropfpolymerisate

In einem Reaktor werden vorgelegt:
3700 Gew.-Teile Latex 2.1)
770 Gew.-Teile Wasser.
Nach Initiierrung mittels einer Lösung von 3,5 Gew.-Teilen Kaliumperoxydisulfat in 150 Gew.-Teile Wasser bei 70°C werden folgende Lösungen in den Reaktor innerhalb von 5 Stunden gleichmäßig eingespeist:
    Lösung 1:    855 Gew.-Teile Monomer
    Lösung 2:    1000 Gew.-Teile Wasser
                30 Gew.-Teile Na-Salz von $C_{14}$-$C_{18}$-Alkylsulfonsäuren
Anschließend polymerisiert man innerhalb von 4 Stunden bei 70°C - 75°C aus. Es resultieren Latices mit Feststoffgehalten von ca. 33 Gew.-%.
Es wurden folgende Produkte hergestellt:

| Produkt | Monomer (Gew.-Teile) |
|---------|----------------------|
| 3.1     | 616 Styrol           |
|         | 239 Acrylnitril      |
| 3.2     | 855 Methylmethacrylat |
| 3.3     | 455 Methylmethacrylat |
|         | 400 Styrol           |

4.) Vergleichsbeispiele

4.1) Ein ABS-Pfropfpolymerisat aus 60 Gew.-% grobteiligem, hochvernetztem Polybutadien und 40 Gew.-% SAN-Polymerisat mit einem Styrol/Acrylnitril-Gem-Verhältnis von 72/88. Mittlere Teilchengröße ($d_{50}$): 400 nm.
4.2) Ein ASA-Pfropfpolymerisat aus 60 Gew.-% grobteiligem, hochvernetztem Acrylatkautschuk und 40 Gew.-% SAN (derselben Zusammensetzung wie bei 4.1). Mittlere Teilchengröße ($d_{50}$) 420 nm. Das Produkt wurde hergestellt gemäß EP-A-34748.

5) Thermoplasteigenschaften

Die in der Tabelle 1 angegebenen Formmassen werden hergestellt durch Compoundierung auf einem Banbury-Mischer BR (Pomini-Farrel) unter folgenden Mischbedingungen:

Massetemperatur:  190 - 225 °C
Mischzeiten:  1,5 - 2 Min.
Cycluszeiten:  2 - 4 Min.

Das Mischgut fällt aus dem Banbury-Mischer auf einen Zweiwalzenstuhl (Walze 1 T = 160 °C, Walze 2 T = 150 °C), wird in Form eines Bandes abgenommen und nach Abkühlung granuliert.

Aus dem Granulat werden durch Spritzguß bei 220 °C Normkleinstäbe hergestellt und diese nach DIN-Methoden untersucht.

Die resultierenden erfindungsgemäßen Pfropfpolymerisate besitzen folgende Eigenschaften:

| Produkt | Kautschukgehalt | mittlere Teilchengröße ($d_{50}$) | (nm) |
|---------|-----------------|-----------------------------------|------|
| 3.1 | 60 Gew.-% | 310 | nm |
| 3.2 | 60 Gew.-% | 295 | nm |
| 3.3 | 60 Gew.-% | 325 | nm |

Die genaue Zusammensetzung Kern (a), Hülle (b), Hülle (c) ergibt sich zu:

| Produkt | (a)/(b) | (c) bezogen auf 100 Teile Pfropf-polymerisat (Gew.-%) |
|---------|---------|-------------------------------------------------------|
| 3.1 | 80/20 | 40 |
| 3.2 | 80/20 | 40 |
| 3.3 | 80/20 | 40 |

**Tabelle 1: Thermoplastische Mischungen**

| Beispiel | Pfropfpolymer (Gew.-Teile) | | Harz-Gew.-Teile | Gleitmittel |
|---|---|---|---|---|
| 5.1 | 33,3 ┤ 3.1 | 33,3 | 66,7 SAN | 3 AC |
| 5.2 | 33,3 ┤ 3.2 | 33,3 | 66,7 SAN | 3 AC |
| 5.3 | 33,3 ┤ 4.1 | 33,3 | 66,7 SAN | 3 AC |
| 5.4 | 33,3 ┤ 4.2 | 33,3 | 66,7 SAN | 3 AC |

AC = Bistearylamid des Ethylendiamins

SAN = Copolymer aus 74 Gew.-% Styrol und 20 Gew.-% Acrylnitril, Staudinger-Index, gemessen in DMF bei 25°C: 0,84 g1/g

**Tabelle 2: Eigenschaften der Formmasse aus Tabelle 1**

| Produkt | Kerbschlagzähigkeit $kJ/m^2$ bei 23°C | bei -40°C | Kugeleindruckhärte $H_C$ (30) $(kg/m^2)$ | Wärmeformbeständigkeit Vicat B (°C) | Fließspirale (cm) bei 240°C |
|---|---|---|---|---|---|
| 5.1 | 13,5 | 6,5 | 92 | 103 | 52 |
| 5.2 | 12 | 4,5 | 94 | 101 | 55 |
| 5.3 | 10,5 | 5 | 89 | 99 | 40 |
| 5.4 | 8,7 | 1,5 | 88 | 97 | 48 |

**Patentansprüche**

1. Teilchenförmige Pfropfpolymerisate eines mittleren Teilchendurchmessers ($d_{50}$) von 0,05 bis 10µm aus einem Kern (a), der einen vernetzten Silikonkautschuk darstellt, einer ersten Hüllen (b), die einen vernetzten Acrylatkautschuk darstellt, und einer zweiten Hülle (c), die ein Polymerisat oder Copolymerisat aus harzbildenden Monomeren darstellt, mit einem Gewichts verhältnis von (a) zu (b) 0,1:99,9 bis 90:10 und einem Anteil von (c) am genannten Pfropfpolymerisat von 90 bis 20 Gew.-%.

2. Verfahren zur Herstellung der teilchenförmiger Pfropfpolymerisate gemäß Anspruch 1, dadurch gekennzeichnet, daß man in einer ersten Stufe in an sich bekannter Weise durch Emulsionspolymerisation einen Silikonkautschuk in Latexform herstellt, danach in einer zweiten Stufe zur Herstellung des Acrylatkautschuks für die erste Hülle ein Acrylatmonomer und ein vernetzendes polyfunktionelles Monomeres in den Latex der ersten Stufe einemulgiert und mit radikalischen Initiatoren polymerisiert, sowie in einer dritten Stufe harzbildende Monomere in den Latex der zweiten Stufe einemulgiert und ebenfalls mit Hilfe von radikalischen Initiatoren polymerisiert.

3. Verwendung der teilchenförmigen Pfropfpolymerisate gemäß Anspruch 1), gegebenenfalls in Abmischung mit spröden thermoplastischen Vinylmonomerharzen, als thermoplastische Formmassen.

## Claims

1. Particulate graft polymers having an average particle diameter ($d_{50}$) of from 0.05 to 10 $\mu$m comprising a core (a) of a cross-linked silicone rubber, a first sheath (b) of a cross-linked acrylate rubber and a second sheath (c) of a polymer or copolymer of resin forming monomers, in which the ratio by weight of (a) to (b) is from 0.1:99.9 to 90:10 and the proportion of (c) in the aforesaid graft polymer is from 90 to 20% by weight.

2. A process for the preparation of the particulate graft polymers according to Claim 1, characterised in that in a first stage, a silicone rubber in latex form is produced in known manner by emulsion polymerisation, in a second stage an acrylate monomer and a cross-linking polyfunctional monomer are then emulsified in the latex of the first stage and polymerised with radical initiators for producing the acrylate rubber for the first sheath, and in a third stage resin forming monomers are emulsified in the latex of the second stage and also polymerised with the aid of radical initiators.

3. Use of the particulate graft polymers according to Claim 1, optionally in admixture with brittle thermoplastic vinyl monomer resins, as thermoplastic moulding compounds.

## Revendications

1. Polymères greffés en particules, à un diamètre de particule moyen ($d_{50}$) de 0,05 à 10 $\mu$m, consistant en un noyau (a) d'un caoutchouc de silicone réticulé, une première enveloppe (b) d'un caoutchouc d'acrylate réticulé et une deuxième enveloppe (c) d'un polymère ou copolymère de monomères formant des résines, à des proportions relatives en poids (a)/(b) de 0,1 : 99,9 à 90 : 10 et à une teneur en (c) de 90 à 20 % en poids dans le polymère greffé.

2. Procédé de préparation des polymères greffés en particules de la revendication 1, caractérisé en ce que, dans un premier stade opératoire, on prépare de manière connue en soi, par polymérisation en émulsion, un caoutchouc de silicone à l'état de latex; dans un deuxième stade opératoire, pour la préparation du caoutchouc d'acrylate de la première enveloppe, on émulsionne un acrylate monomère et un monomère polyfonctionnel réticulant dans le latex du premier stade opératoire et on polymérise à l'aide d'inducteurs radicalaires; et, dans un troisième stade opératoire, on émulsionne les monomères formant des résines dans le latex du deuxième stade opératoire et on polymérise également à l'aide d'inducteurs radicalaires.

3. Utilisation des polymères greffés en particules de la revendication 1, éventuellement en mélange avec des résines thermoplastiques rigides de monomères vinyliques, en tant que matières à mouler thermoplastiques.